# FASCICULE DE BREVET EUROPEEN

(11) **EP 0 432 070 B1**
(45) Date de publication et mention de la délivrance du brevet: **06.07.1994**
(21) Numéro de dépôt: 90440115.5
(22) Date de dépôt: 04.12.1990
(51) Int. Cl.: F16K 35/10, B67D 3/04

(54) **Robinet inviolable muni d'un dispositif de fiscalisation**
Unverletzbarhahn versehen mit einer Vorrichtung zur Besteuerung
Inviolable dispensing tap provided with a taxation device

(30) Priorité: 04.12.1989 FR 8916161
(43) Date de publication de la demande: 12.06.1991
(73) Titulaire: WICOTOP, F-57370 Phalsbourg (FR)
(72) Inventeur: Erb, René, F-57370 Phalsbourg (FR)
(74) Mandataire: Nuss, Pierre

(56) Documents cités:
- AU-A- 542 476
- FR-A- 2 526 515
- FR-A- 2 619 612
- FR-A- 2 623 268
- GB-A- 1 381 391
- GB-A- 2 168 129
- GB-A- 2 188 399
- US-A- 3 442 486

## Description

La présente invention concerne le domaine de la distribution de liquides contenus dans des petits récipients rigides, semi-rigides ou souples, en particulier de liquides alimentaires alcoolisés soumis à une fiscalisation, et a pour objet un robinet inviolable muni d'un dispositif de fiscalisation.

Actuellement, la distribution de boissons alimentaires, notamment de vins de table, à partir de petits récipients rigides, semi-rigides ou souples, tels que des outres en matière synthétique, s'effectue généralement au moyen de robinets fixés sur la bonde de vidange de ces récipients.

Ces robinets permettent une distribution correcte des liquides par la prévision de boisseaux ou de vannes chargées par ressorts mais présentent l'inconvénient de pouvoir difficilement être munis d'un moyen de fiscalisation évitant les fraudes éventuelles. En effet, les robinets connus, à boisseaux ou à vannes chargées par ressorts et manoeuvrées par pression, ne présentent généralement pas une surface permettant l'apposition d'un moyen de fiscalisation tel qu'un timbre ou une vignette devant être arraché avant la première utilisation.

Pour obvier à cet inconvénient, il a été proposé de recouvrir l'ensemble du robinet d'un élément annexe formant un cache constitué par une capsule thermorétractable fixée sur le récipient et portant la vignette de fiscalisation, qui doit être détruite pour libérer le robinet en vue de sa première utilisation.

Cependant, ce mode de réalisation présente une fiscalisation relativement contraignante et d'un prix de revient élevé. Par ailleurs, ces robinets ne prévoient pas de fixation indémontable du corps du robinet même dans la bonde du récipient, de sorte qu'un même robinet peut servir pour plusieurs récipients.

On connaît également par US-A-3 442 486 un robinet constitué par un corps de montage dans une bonde d'un récipient et de distribution d'un liquide et par un piston de libération du liquide chargé par un ressort, le piston agissant sur une membrane d'étanchéité élastique solidaire du corps. Ce corps de montage dans la bonde du récipient et de distribution du liquide est constitué par un robinet proprement dit, présentant une partie inférieure d'écoulement du liquide et une partie supérieure solidaire de la partie inférieure et formant le guidage du piston et du ressort chargeant ce dernier.

En outre, ce corps de montage est constitué par un emmanchement pourvu d'un filetage pour son montage dans la bonde. Un tel emmanchement permet, certes, un montage étanche dans la bonde, mais ne peut pas assurer un montage inviolable, le corps pouvant être dévissé de la bonde en vue d'une réutilisation de l'ensemble du robinet.

La présente invention a pour but de pallier ces inconvénients.

Elle a, en effet, pour objet un ensemble comportant un robinet, avec une bonde d'un récipient, essentiellement constitué par un corps de montage dans la bonde du récipient et de distribution du liquide et par un piston de libération du liquide, chargé par un ressort, le piston agissant sur une membrane d'étanchéité élastique, solidaire du corps, qui est, d'une part, pourvu d'un robinet proprement dit présentant une partie inférieure d'écoulement du liquide et une partie supérieure solidaire de la partie inférieure et formant le guidage du piston et du ressort chargeant ce dernier et comporte, d'autre part, un emmanchement de fixation dans la bonde du récipient, caractérisé en ce qu'il est pourvu d'un dispositif de fiscalisation arrachable rendant le robinet inviolable et comportant une bague formant une butée entre la partie supérieure du piston et le rebord inférieur de la partie supérieure du robinet et en ce que l'emmanchement de fixation dans la bonde du récipient comporte une large gorge à proximité de l'extrémité coopérant par encliquetage avec une saillie annulaire de la bonde, cette saillie présentant une dépouille vers l'extérieur de ladite bonde et un épaulement à angle aigu vers l'intérieur de cette dernière, ledit épaulement étant à une distance du bord extérieur de la bonde correspondant à l'intervalle compris entre le bord extérieur de la gorge et le bord d'application du corps.

L'invention sera mieux comprise, grâce à la description ci-après. qui se rapporte à des modes de réalisation préférés, donnés à titre d'exemples non limitatifs, et expliqués avec référence aux dessins schématiques annexés, dans lesquels :
la figure 1 est une vue en élévation latérale d'un robinet conforme à l'invention ;
la figure 2 est une vue en élévation frontale du robinet suivant la figure 1 ;
la figure 3 est une vue en coupe, à plus grande échelle, suivant A-A de la figure 1 du robinet en position fermée d'inviolabilité ;
la figure 4 est une vue analogue à celle de la figure 3 du robinet en position ouverte, et
la figure 5 est une vue analogue à celle de la figure 3 d'une variante de réalisation de l'invention.

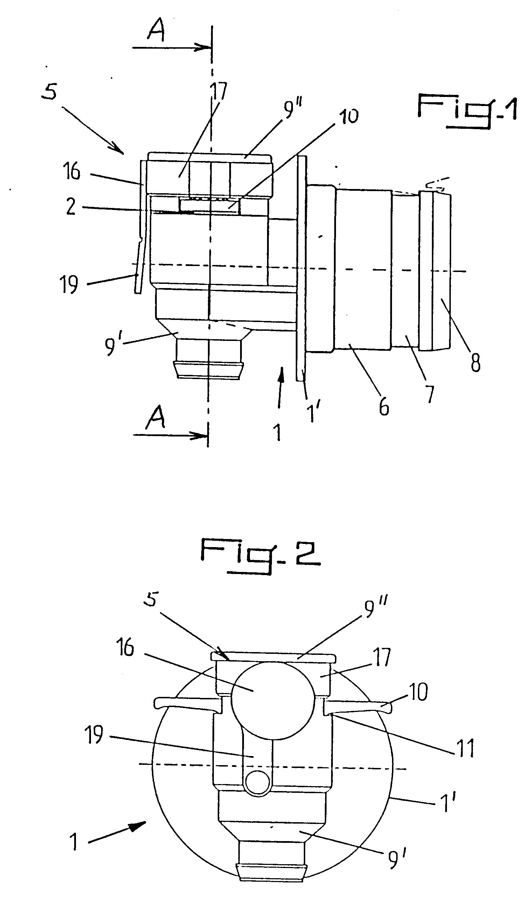

Les figures 1 à 5 des dessins annexés représentent un robinet, qui est essentiellement constitué par un corps 1 de montage dans une bonde d'un récipient et de distribution du liquide et par un piston 2 de libération du liquide chargé par un ressort 3, le piston 2 agissant sur une membrane d'étanchéité élastique 4 solidaire du corps 1. Un dispositif de fiscalisation arrachable 5 rend le robinet inviolable.

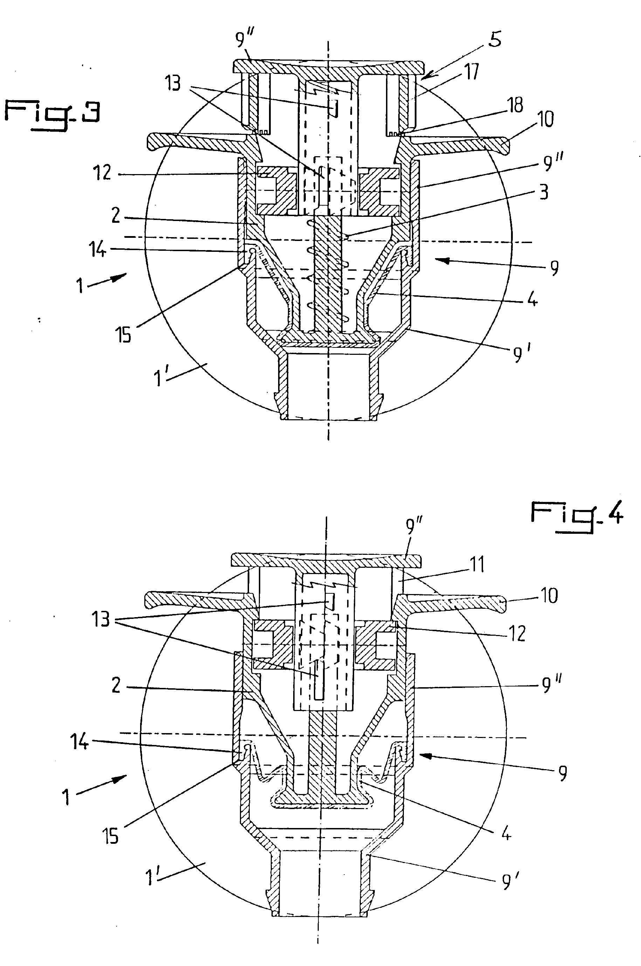

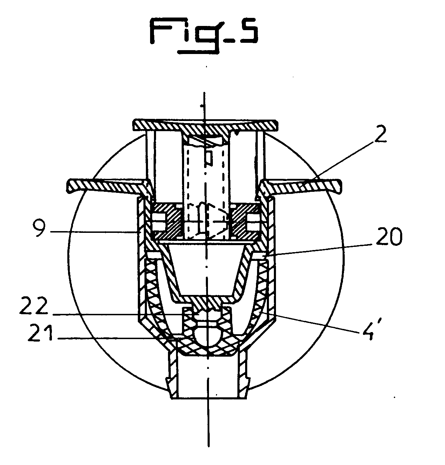

Le corps 1 de montage dans la bonde du récipient et de distribution du liquide est constitué par un emmanchement 6 de fixation dans ladite bonde et comportant une large gorge 7 à proximité de l'extrémité 8 et par un robinet proprement dit 9 présentant une partie inférieure 9′ d'écoulement du liquide et une partie supérieure 9˝ solidaire de la partie inférieure 9′ et formant le guidage du piston 2 et du ressort 3 chargeant ce dernier (figures 3 et 4), la gorge 7 coopérant par encliquetage avec une saillie annulaire de la bonde, cette saillie présentant une dépouille vers l'extérieur de ladite bonde et un épaulement à angle aigu vers l'intérieur de cette dernière, ledit épaulement étant à une distance du bord extérieur de la bonde correspondant à l'intervalle compris entre le bord extérieur de la gorge 7 et le bord d'application 1′ du corps 1.

Le piston 2 est avantageusement muni à sa partie supérieure d'appendices 10 de manoeuvre s'étendant à l'extérieur du robinet 9 à travers des ouvertures 11 de ce dernier et est pourvu d'une bague d'encliquetage 12 coopérant avec un moyen d'encliquetage 13 prévu sur la partie supérieure 9˝ dudit robinet 9. Un tel dispositif d'encliquetage est du type à dents inclinées fixes sur la partie 9˝ coopérant avec des dents correspondantes de la bague 12, qui est montée de manière mobile dans le piston 2. Ainsi, à chaque traction sur les appendices 10 du piston 2, les dents de la bague 12 coopèrent avec celles prévues sur la partie 9˝ et amènent ladite bague 12, par rotation, dans une position supérieure d'appui sur le moyen d'encliquetage 13 de la partie 9˝, une nouvelle traction sur lesdits appendices 10 provoquant une rotation supplémentaire de la bague 12 ayant pour effet d'amener les dents de cette dernière à glisser dans des passages verticaux du moyen 13 et autorisant ainsi le retour en position de fermeture du piston 2.

La membrane d'étanchéité élastique 4 est avantageusement fixée par une lèvre circonférentielle 14 dans une rainure périphérique 15 de la partie inférieure 9′ du robinet 9 et présente un logement pour l'extrémité inférieure du piston 2, l'ensemble ainsi formé s'appuyant sur une partie tronconique de ladite partie inférieure 9′ du robinet 9 au-dessus de son orifice de sortie. Ainsi, il est possible de garantir une étanchéité parfaite entre le corps du robinet 9 et le piston 2, le ressort 3 chargeant ledit piston 2 réalisant un effet d'écrasement de la membrane d'étanchéité élastique 4 sur la partie tronconique de la partie inférieure 9′ dudit robinet 9.

Le dispositif de fiscalisation arrachable 5 se présente avantageusement sous forme d'un médaillon 16 solidaire d'une bague d'arrachage 17 reliée à la partie supérieure du piston 2 par une bande fragilisée 18 s'étendant sous le bord de la partie supérieure 9˝ du robinet 9, ledit médaillon 16 étant muni d'une languette d'arrachage 19 (figures 1 et 2). Le médaillon 16 est destiné à la réception d'une vignette de fiscalisation collée à cheval sur ledit médaillon et sur le robinet 9 et la bague d'arrachage 17, solidaire dudit médaillon 16, est destinée à empêcher toute manoeuvre du piston 2 tant que ledit médaillon 16 et la bague 17 ne sont pas arrachés, ladite bague 17 formant une butée entre la partie supérieure du piston 2 et le rebord inférieur de la partie supérieure 9˝ du robinet 9.

Selon une variante de réalisation de l'invention, la bague d'arrachage 17 est avantageusement sous forme d'une bague indépendante, insérée entre la partie supérieure du piston 2 et le bord de la partie supérieure 9˝ du robinet 9, le médaillon 16 étant fragilisé en vue de l'arrachage de la bague. Ainsi, la bague 17 peut être montée et fabriquée indépendamment du piston 2, ce qui entraîne une réduction correspondante du coût de fabrication.

La large gorge 7 prévue à proximité de l'extrémité 8 de l'emmanchement 6 est destinée à rendre inviolable le montage du robinet dans la bonde du récipient. En effet, la gorge 7 permet, comme le montre la figure 1, un montage relativement aisé dans ladite bonde par déformation élastique de la saillie annulaire de cette dernière et grâce à sa conicité, l'épaulement prévu sur cette saillie vers l'intérieur de la bonde venant s'encliqueter, en position définitive de montage, derrière le bord extérieur de la gorge 7. Du fait même que l'épaulement est situé à une distance du bord d'application 1′ du corps 1 égale à l'intervalle compris entre le bord extérieur de la gorge 7 et le bord d'application 1′, un démontage du corps 1, par déformation élastique en sens inverse, n'est pas possible.

La figure 5 représente une variante de réalisation de l'invention, dans laquelle la membrane d'étanchéité élastique 4′ est une membrane auto-rétractable coopérant par son extrémité arrière avec un profil de retenue 20 sous forme d'un épaulement annulaire intérieur du corps de robinet 9, cette membrane 4′ coopérant au moyen d'un logement 21 avec l'extrémité inférieure 22 du piston 2 par emboîtement de cette dernière, ledit piston 2 étant guidé dans le corps de robinet 9 et rappelé en position de fermeture dudit robinet par la membrane 4′ sans intervention d'un ressort.

Ce mode de réalisation permet l'obtention d'un robinet de constitution plus simple, donc moins onéreux, et pouvant être monté plus facilement.

Grâce à l'invention, il est possible de réaliser un robinet pouvant être monté de manière inviolable sur un récipient et dont l'utilisation est unique. En outre, ce robinet peut parfaitement être fiscalisé en empêchant toute fraude, le moyen de fiscalisation étant solidarisé avec un moyen arrachable destiné à empêcher toute violation du robinet. Il en résulte que l'utilisation du robinet entraîne immanquablement la destruction du moyen de fiscalisation.

L'invention est plus particulièrement applicable dans le domaine de la distribution de boissons alimentaires soumises à une fiscalisation, en particulier de vins de table distribués dans des lieux publics.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Ensemble comportant un robinet, avec une bonde d'un récipient, essentiellement constitué par un corps (1) de montage dans la bonde du récipient et de distribution du liquide et par un piston (2) de libération du liquide, chargé par un ressort (3), le piston (2) agissant sur une membrane d'étanchéité élastique (4), solidaire du corps (1), qui est, d'une part, pourvu d'un robinet proprement dit (9) présentant une partie inférieure (9′) d'écoulement du liquide et une partie supérieure (9˝) solidaire de la partie inférieure (9′) et formant le guidage du piston (2) et du ressort (3) chargeant ce dernier et comporte, d'autre part, un emmanchement (6) de fixation dans la bonde du récipient, caractérisé en ce qu'il est pourvu d'un dispositif de fiscalisation arrachable (5) rendant le robinet inviolable et comportant une bague (17) formant une butée entre la partie supérieure du piston (2) et le rebord inférieur de la partie supérieure (9˝) du robinet (9) et en ce que l'emmanchement (6) de fixation dans la bonde du récipient comporte une large gorge (7) à proximité de l'extrémité (8) coopérant par encliquetage avec une saillie annulaire de la bonde, cette saillie présentant une dépouille vers l'extérieur de ladite bonde et un épaulement à angle aigu vers l'intérieur de cette dernière, ledit épaulement étant à une distance du bord extérieur de la bonde correspondant à l'intervalle compris entre le bord extérieur de la gorge (7) et un bord d'application (1′) du corps (1).

2. Ensemble, suivant la revendication 1, caractérisé en ce que le piston (2) est avantageusement muni à sa partie supérieure d'appendices (10) de manoeuvre s'étendant à l'extérieur du robinet (9) à travers des ouvertures (11) de ce dernier et est pourvu d'une bague d'encliquetage (12) coopérant avec un moyen d'encliquetage (13) prévu sur la partie supérieure (9˝) dudit robinet (9).

3. Ensemble, suivant l'une quelconque des revendications 1 et 2, caractérisé en ce que la membrane d'étanchéité élastique (4) est avantageusement fixée par une lèvre circonférentielle (14) dans une rainure périphérique (15) de la partie inférieure (9′) du robinet (9) et présente un logement pour l'extrémité inférieure du piston (2), l'ensemble ainsi formé s'appuyant sur une partie tronconique de ladite partie inférieure (9′) du robinet (9) au-dessus de son orifice de sortie.

4. Ensemble, suivant l'une quelconque des revendications 1 et 2, caractérisé en ce que le dispositif de fiscalisation arrachable (5) se présente avantageusement sous forme d'un médaillon (16) solidaire d'une bague d'arrachage (17) reliée à la partie supérieure du piston (2) par une bande fragilisée (18) s'étendant sous le bord de la partie supérieure (9˝) du robinet (9), ledit médaillon (16) étant muni d'une languette d'arrachage (19).

5. Ensemble, suivant la revendication 4, caractérisé en ce que la bague d'arrachage (17) est avantageusement sous forme d'une bague indépendante insérée entre la partie supérieure du piston (2) et le bord de la partie supérieure (9˝) du robinet (9), le médaillon (16) étant fragilisé en vue de l'arrachage de la bague.

6. Ensemble, suivant la revendication 1, caractérisé en ce qu'il est pourvu d'une membrane d'étanchéité élastique (4′) sous forme d'une membrane auto-rétractable coopérant par son extrémité arrière avec un profil de retenue (20) sous forme d'un épaulement annulaire intérieur du corps de robinet (9), cette membrane (4′) coopérant au moyen d'un logement (21) avec l'extrémité inférieure (22) du piston (2) par emboîtement de cette dernière, ledit piston (2) étant guidé dans le corps de robinet (9) et rappelé en position de fermeture dudit robinet par la membrane (4′) exerçant une fonction de ressort.

## Patentansprüche

1. Einheit aus einem Hahn und einer Auslauföffnung eines Behälters, im wesentlichen gebildet durch einen Körper (1) zur Montage in der Auslauföffnung des Behälters und zur Abgabe der Flüssigkeit und durch einen durch eine Feder (3) beaufschlagten Kolben (2) zur Freigabe der Flüssigkeit, der auf eine mit dem Körper (1) verbundene elastische Dichtmembran wirkt, wobei der Körper einerseits mit einem eigentlichen Hahn (9) versehen ist, der einen unteren Teil (9′) zum Ausfließen der Flüssigkeit und einen oberen mit dem unteren Teil (9′) verbundenen und die Führung für den Kolben (2) und die diesen beaufschlagende Feder (3) bildenden oberen Teil (9˝) aufweist, und andererseits ein Einsteckende (6) zur Befestigung in der Auslauföffnung des Behälters aufweist, dadurch gekennzeichnet, daß sie mit einer abreißbaren Besteuerungseinrichtung (5) versehen ist, die den Hahn unverletzbar macht und einen Ring (17) enthält, der einen Anschlag zwischen dem oberen Teil des Kolbens (2) und dem unteren Rand des oberen Teils (9˝) des Hahns (9) bildet, und daß das Einsteckende (6) zur Befestigung in der Auslaßöffnung des Behälters eine breite Nut (7) in der Nähe des Endes (8) aufweist, die einrastend mit einem ringförmigen Vorsprung der Auslaßöffnung zusammenwirkt, wobei dieser Vorsprung eine Schräge in Richtung auf das Äußere der Auslaßöffnung und eine Schulter mit spitzem Winkel in ihr Inneres aufweist und die Schulter unter einem Abstand von dem Außenrand der Auslaßöffnung liegt, der dem Zwischenraum zwischen dem Außenrand der Nut (7) und einem Anlagerand (1′) des Körpers (1) entspricht.

2. Einheit nach Anspruch 1, dadurch gekennzeichnet, daß der Kolben (2) vorteilhafterweise in seinem oberen Teil mit Handhabungsansätzen (10) versehen ist, die sich zum Äußeren des Hahns (9) durch Öffnungen (11) des letzteren hindurch erstrecken, und mit einem Einklinkring (12) versehen ist, der mit einem Einklinkmittel (13) zusammenwirkt, das auf dem oberen Teil (9˝) des Hahns (9) vorgesehen ist.

3. Einheit nach einem der Ansprüche 1 und 2, dadurch gekennzeichnet, daß die elastische Dichtmembran (4) vorteilhafterweise durch eine Umfangslippe (14) in einer Umfangsnut (15) des unteren Teils (9′) des Hahns (9) befestigt ist und eine Aufnahme für das untere Ende des Kolbens (2) enthält, wobei die so gebildete Einheit sich auf einem kegelstumpfförmigen Teil des unteren Teils (9′) des Hahns (9) oberhalb seiner Auslaßöffnung abstützt.

4. Einheit nach einem der Ansprüche 1 und 2, dadurch gekennzeichnet, daß die abreißbare Besteuerungseinrichtung (5) sich vorteilhafterweise in Form eines Medaillons (16) darstellt, das mit einem Abreißring (17) verbunden ist, der mit dem oberen Teil des Kolbens (2) durch ein geschwächtes Band (18) verbunden ist, das sich unter dem Rand des oberen Teils (9˝) des Kolbens (9) erstreckt, wobei das Medaillon (16) mit einer Abreißzunge (19) versehen ist.

5. Einheit nach Anspruch 4, dadurch gekennzeichnet, daß der Abreißring (17) vorteilhafterweise in Form eines unabhängigen Rings ist, der zwischen den oberen Teil des Kolbens (2) und den Rand des oberen Teils (9˝) des Hahns (9) eingesetzt ist, wobei das Medaillon (16) zum Wegreißen des Rings geschwächt ist.

6. Einheit nach Anspruch 1, dadurch gekennzeichnet, daβ sie mit einer elastischen Dichtmembran (4′) in Form einer sich selbst zurückziehenden Membran versehen ist, die mit ihrem hinteren Ende mit einem Halteprofil (20) in Form einer ringförmigen inneren Schulter des Körpers des Hahns (9) zusammenwirkt, wobei die Membran (4′) mit Hilfe einer Aufnahme (21) mit dem unteren Ende (22) des Kolbens (2) durch dessen Einfügung zusammenwirkt, wobei der Kolben (2) in dem Körper des Hahns (9) geführt ist und in die Schlieβposition des Hahns durch die Membran (4′) zurückgeführt wird, die eine Federfunktion ausübt.

## Claims

1. Unit comprising a tap, with a plug of a container, essentially consisting of a body (1) for installation in the plug of the container and for distribution of the liquid and of a piston (2) for release of the liquid, which is loaded by a spring (3), the piston (2) acting on an elastic sealing membrane (4) integral with the body (1) which, on the one hand, is provided with a tap proper (9) having a lower portion (9′) for the flow of the liquid and an upper portion (9˝) integral with the lower portion (9′) and forming a guide for the piston (2) and for the spring (3) loading the piston (2) and, on the other hand, comprises an engagement means (6) for fixation in the plug of the container, characterised in that it is provided with a tearable taxing device (5) rendering the tap tamperproof and comprising a ring (17) forming a stop between the upper portion of the piston (2) and the lower rim of the upper portion (9˝) of the tap (9) and in that the engagement means (6) for fixation in the plug of the container comprises a wide groove (7) in the vicinity of the end (8) cooperating by catching with an annular projection of the plug, this projection having a clearance towards the exterior of said plug and a shoulder at an acute angle towards the interior thereof, said shoulder being at a distance from the external edge of the plug corresponding to the interval between the external edge of the groove (7) and an edge (1′) for application of the body (1).

2. Unit according to claim 1, characterised in that the piston (2) is advantageously equipped at its upper portion with handling attachements (10) extending to the exterior of the tap (9) through apertures (11) therein and is provided with a catching ring (12) cooperating with a catching means (13) provided on the upper portion (9˝) of said tap (9).

3. Unit according to any one of claims 1 and 2, characterised in that the elastic sealing membrane (4) is advantageously fixed by a circumferential lip (14) in a peripheral furrow (15) of the lower portion (9′) of the tap (9) and has a recess for the lower end of the piston (2), the unit thus formed resting on a truncated cone shaped portion of said lower portion (9′) of the tap (9) above its outlet orifice.

4. Unit according to any one of claims 1 and 2, characterised in that the tearable taxing device (5) advantageously has the form of a medallion (16) integral with a tear ring (17) connected to the upper portion of the piston (2) by a weakened strip (18) extending beneath the edge of the upper portion (9˝) of the tap (9), said medallion (16) being equipped with a tear tab (19).

5. Unit according to claim 4, characterised in that the tear ring (17) is advantageously in the form of an independent ring inserted between the upper portion of the piston (2) and the edge of the upper portion (9˝) of the tap (9), the medallion (16) being weakened for the purpose of tearing the ring.

6. Unit according to claim 1, characterised in that it is provided with an elastic sealing membrane (4′) in the form of a self-retracting membrane cooperating by its rear end with a retaining profile (20) in the form of an internal annular shoulder of the body (9) of the tap, this membrane (4′) cooperating by means of a recess (21) with the lower end (22) of the piston (2) by nesting thereof, said piston (2) being guided in the body of the tap (9) and being returned to the closure position of said tap by the membrane (4′) exerting a spring function.
